# EUROPEAN PATENT SPECIFICATION

(11) **EP 4 444 596 B1**
(45) Date of publication and mention of the grant of the patent: **14.10.2026**
(21) Application number: 22844410.5
(22) Date of filing: 08.12.2022
(51) Int. Cl.: B62B 3/10, B62B 5/00, B62B 5/04

(54) **DECORATIVE ARTICLE DELIVERY DEVICE**
VORRICHTUNG ZUM ZUFÜHREN DEKORATIVER ARTIKEL
DISPOSITIF DE DISTRIBUTION D'ARTICLE DÉCORATIF

(30) Priority: 08.12.2021 US 202163265129 P
(43) Date of publication of application: 16.10.2024
(60) Divisional application: 25155164.4 / 4 556 347
(73) Proprietor: Shaw Industries Group, Inc., Dalton, GA 30720 (US)
(72) Inventor: JOHNSON, Ronald Wayne, Dalton, Georgia 30720 (US); CAHILL, Christopher Edwin, Calhoun, Georgia 30701 (US); TANKERSLEY, Adam Drew, Dalton, Georgia 30720 (US)
(74) Representative: Haseltine Lake Kempner LLP
(86) International application number: PCT/US2022/081162
(87) International publication number: WO 2023/108056

(56) References cited:
- BE-A- 735 400
- CN-A- 110 641 527
- GB-A- 2 311 766
- US-A- 2 799 415

## Description

### BACKGROUND

Decorative articles can be manufactured in rolls of significant length, diameter, and weight. For example, a typical roll of decorative article may be up to fifteen feet (4.6 m) in length, one or more feet (0.3 or more metres) in diameter and roughly up to 1200 pounds (544 kg) in weight. Manipulation of such decorative article rolls is thus a challenge, particularly in environments that are not optimized for movement of heavy, bulky articles. For example, in some instances, the materials must be off-loaded from vehicles onto a parking lot or open field where specialized transport equipment either does not exist or cannot be easily maneuvered. Examples of wheeled devices for the manipulation of decorative article rolls are described in CN110641527A, GB2311766A, US2799415 and BE735400A.

### BRIEF SUMMARY

The invention is defined in and by the appended claims and pertains to the conveyance of bulky, weighty materials such as rolled decorative articles.

In one aspect, the present invention pertains to a decorative article product delivery device that comprises a planar, rectangular bed having first and second ends; two passive casters mechanically attached to the underside of the bed at the first end thereof, each of the passive casters configured to be freely rotatable about a respective vertical axis; two driven casters mechanically attached to the underside of the bed at the second end thereof, each of the driven casters configured to not rotate about a respective vertical axis; two electric motor units, each in communication with a respective one of the two driven casters, for selectively driving the respective caster in response to a control signal; a control handle mechanically communicating with the bed and being in electrical communication with the two electric motor units for selectively conveying the control signal thereto; a cradle in mechanical communication with the bed for receiving the decorative article roll therein, the cradle comprising a frusto-cylindrical member having an arcuate portion disposed proximate the bed and first and second upwardly curving side portions, the first side portion being pivotally connected to the bed along a lateral pivot; and an off-loading lever mechanically connected to the bed via a lateral pivot for selectively engaging an outer portion of the second side portion to force the cradle to rotate about the first side portion pivot for enabling the off-loading of the decorative article roll.

In an embodiment, the decorative article delivery device further comprises a mechanical brake mounted with respect to the bed. The brake may be a truck lock or jack.

In another embodiment, the decorative article delivery device further comprises at least one battery in communication with the two electric motor units.

In another aspect, the present invention pertains to a product delivery device that comprises a planar, rectangular bed having first and second ends; two passive casters mechanically attached to the underside of the bed at the first end thereof, each of the passive casters configured to be freely rotatable about a respective vertical axis; two driven casters mechanically attached to the underside of the bed at the second end thereof, each of the driven casters configured to not rotate about a respective vertical axis; two electric motor units, each in communication with a respective one of the two driven casters, for selectively driving the respective caster in response to a control signal; a control handle mechanically communicating with the bed and being in electrical communication with the two electric motor units for selectively conveying the control signal thereto; and a pair of chocks in mechanical communication with the bed for receiving the product therein, each chock comprising a first arcuate side and a second vertically planar side, each chock being selectively, mechanically connected to opposite sides of the bed with the first or second side thereof facing the other chock.

In an embodiment, the product delivery device further comprises a plate intermediate the chocks and the bed, the plate having a plurality of mechanical features for selective engagement with the chocks for enabling the lateral placement of the chocks across the width of the bed.

In another embodiment, the product delivery device further comprises a lateral pivot intermediate the plate and the bed for enabling the plate to be rotated with respect to the bed for facilitating the off-loading of product from the plate.

In yet another embodiment, the product delivery device further comprises an off-loading lever mechanically connected to the bed via a lateral pivot for selectively rotating the plate with respect to the bed.

Further still, in an embodiment, the product delivery device further comprises a mechanical brake mounted with respect to the bed. The brake may be a truck lock or jack.

In an embodiment, the product delivery device further comprises at least one battery in communication with the two electric motor units.

In another embodiment, the casters have a battery and electric motor associated therewith.

In another embodiment, the decorative delivery device further comprises a brake.

In another embodiment, the locking and adjusting element comprises a foot pump or a hydraulic lift.

In another embodiment, the handle comprises an electrical control for the casters wherein the control comprises a variable motor speed control, a speed more control, an on/off switch, a horn, an emergency stop control, and/or a battery-life indicator.

In another embodiment, the decorative delivery device further comprises a pivotable plate and/or a cradle.

In another embodiment, the decorative delivery device further comprises one or more sensors.

### BRIEF DESCRIPTION OF THE DRAWINGS

Fig. 1A is a first end view of a decorative article delivery device according to the present disclosure;
Fig. 1B is a side view of the decorative article delivery device of Fig. 1A;
Fig. 1C is a second end view of the decorative article delivery device of Fig. 1A;
Fig. 2A is a first end view of a first alternative embodiment of the decorative article delivery device of Fig. 1A;
Fig. 2B is a first end view of a second alternative embodiment of the decorative article delivery device of Fig. 1A;
Fig. 2C is a partial first end view of an alternative configuration of the second alternative embodiment of the decorative article delivery device of Fig. 2B; and
Fig. 3 is a first end view of an alternative configuration of the first alternative embodiment of the decorative article delivery device of Fig. 2A.

### DETAILED DESCRIPTION OF EXEMPLARY EMBODIMENTS

Distribution facilities from which decorative articles in rolled form are sourced and major retail establishments to which such materials are delivered may be provided with loading docks especially configured for loading and unloading the materials to and from trucks or tractor trailers. For example, these facilities are typically provided with floors that are substantially level with the vehicle beds and that are smooth for easy rolling of forklifts, lift trucks with a pole attachment, or palette jacks. However, many smaller retailers receiving bulk decorative articles do not have especially configured loading docks for facilitating the off-loading and movement of these materials. Roll carrier trolleys or dollies are two wheeled frames configured to receive the decorative articles that are in the rolled form (also referred to as 'rolled decorative articles'), but these must be manually and awkwardly moved. This movement may be a challenge if the ground over which the materials must be moved is formed of gravel, pitted, or covered with contaminants such as dirt, ice or snow. Manual manipulation of such bulky items may also expose operators to risk of injury.

The decorative article delivery device (also referred to as 'delivery device') of the present disclosure provides a powered conveyance that is light weight and compact and is particularly configured to securely receive bulky items, such as rolled decorative articles. The decorative article delivery device is configured to be easily manipulated despite the weight and configuration of the materials carried, and configured to facilitate the targeted delivery of such materials, thereby minimizing the risk of physical injury to the attendant operators, to prevent damage to the goods being manipulated and to enable the delivery to facilities heretofore unserved due to the lack of proper delivery environments. Said conveyance is designed (dimensions, weight, shape, etc.) such that it is storable in the truck that transports the rolled decorative article without compromising the quantity of rolled decorative articles.

The present disclosure relates to various embodiments of a delivery device 10 that in a first illustrative embodiment is particularly configured for receiving, conveying and delivering rolled decorative articles such as, but not limited to, carpet, vinyl and padding. Other embodiments of the delivery device for receiving, conveying and delivering boxed goods, planks and tiles are also contemplated.

As previously discussed, decorative articles may be manufactured and distributed in large rolls. For example, a typical roll of decorative article described herein may be up to fifteen feet (4.6 metres) long, a foot or more (0.3 metres or more) in diameter, and may weigh up to twelve hundred pounds (544 kg). Other dimensions and weights are possible. In one example, the rolled decorative article may be 8-12 feet (2.4-3.7 metres) in length, greater than 1 foot (0.3 metres) in diameter, and 800-1200 pounds (363-544 kg). In some examples, the weight of the rolled decorative article may be 150-1400 pounds (68-635 kg). In one or more examples, the weight, diameter, and/or the length of the rolled decorative article may be such that the rolled decorative article is inconvenient or substantially challenging for a single or multiple average sized humans to maneuver in a safe manner (bodily safety and/or safety of surrounding structures/materials). The presently disclosed delivery device 10 facilitates the conveyance of such products in environments lacking facilities such as loading docks particularly configured for off-loading materials from vehicles such as trucks and tractor trailers (e.g., in dense urban areas, cities, rural areas with minimal infrastructure, small retail locations or warehouses, etc.).

The term 'decorative article' and/or 'rolled decorative article' and/or 'rolled good' as used herein refers to flooring products or materials such as, but not limited to, carpets, padding, sheet vinyl goods, etc., that are typically transported and stored in a rolled form. The terms "decorative article" or "rolled decorative article" or "rolled good is interchangeably referred to as carpet, flooring product, or flooring material, or flooring element, or other rolled articles (e.g., large, heavy, and/or unwieldy rolled articles) for example. It is noted that while the term "decorative article" is used, the article has functional use and features and is not limited to the aesthetic feature of the article. For example, the decorative article is used to cover a substructure, like a floor, to provide better acoustic in a room, underfoot comfort, wear and tear features, water-resistance or waterproof features, etc.

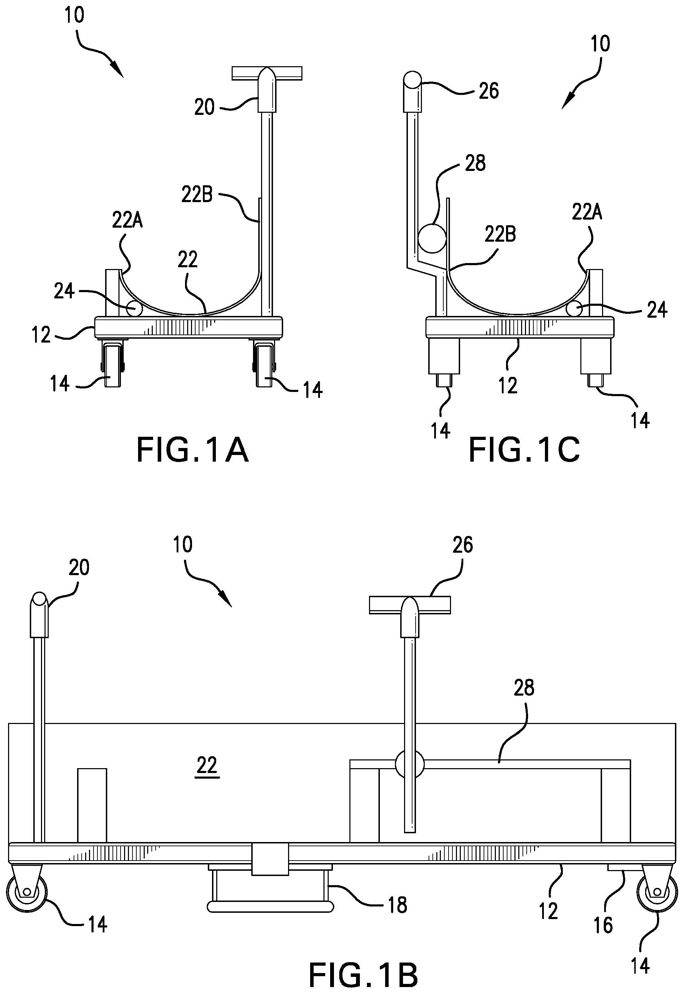

With reference to Figs. 1A-1C, the delivery device 10 includes a bed 12, which in a first embodiment is a rectangular plane typically oriented parallel to the ground. The shape of the bed 12 is not limited to rectangular and can be any shape that is convenient, such as square, round, oval and the like. Disposed underneath the bed 12 are casters 14. In a first embodiment, there is one caster 14 proximate to and underneath a respective corner of the bed 12. While all four casters 14 may be free to pivot about a respective vertical axis, in one embodiment, two of the casters 14 at one end of the bed 12 are axially fixed and for the other two casters 14 at the opposite end of the bed 14 to be rotatable about the respective vertical axis.

At least one of the casters 14 is a self-powered, driven caster 14 while the other casters 14 are passive casters 14. In one embodiment, there are two driven casters 14 and two passive casters 14, and the driven casters 14 are rotationally fixed with respect to the bed 12 while the passive casters 14 are free to pivotally rotate about a respective vertical axis. In some examples, the driven casters 14 may be free to rotate about a respective vertical axis and may be locked in a desired rotated position. For example, the driven casters 14 may be individually rotatable about a vertical axis and once they are rotated to a desired direction (angle or position), they may be locked at the desired direction after which they may be powered to move in the set direction. In some examples, the passive casters may also be freely rotatable about a vertical axis and lockable (or can be fixed) at a desired direction.

For example, each driven caster 14 has associated therewith a battery and electric motor unit 16, as seen in Fig. 1B. Alternatively, each driven caster has a respective electric motor unit and the two driven casters share a single battery. It is understood that reference to a battery may include a battery pack comprised of plural individual battery cells, such as 18 volt batteries. One or more interfaces to sources of recharging power are provided with respect to the battery. In some examples, the motors associated with the driven casters 14 may be hydraulic motors. In some examples, the motors associated with the driven casters 14 may be electrically controlled (e.g., electric motor unit 16) as described above, whereas in other examples, the motors may be mechanically controlled.

Each electric motor unit 16 provides a range of rotational rates for the respective caster 14 and may also provide a degree of braking action. However, the illustrated embodiment of Fig. 1B also includes an optional brake 18 in the form of a truck lock or jack. A truck lock is a spring-biased pad that may be actuated by downward pressure of an operator's foot on an associated lever. This forces a pad of the truck lock to be pushed downward into contact with the floor or ground under the bed 12 for holding the delivery device 10 in place.

However, in environments in which the ground or floor is not truly horizontal, in one embodiment, a jack can be employed as the brake 18 for the delivery device 10. A jack is also a spring-biased pad that is selectively actuatable as with respect to the truck lock. However, the range of vertical motion of the jack is greater, such that at least one caster 14 of the delivery device is raised off the ground or floor.

The brake 18 is also provided with a mechanical release mechanism that is actuatable by the foot of an operator, in one embodiment, for causing vertical movement of the pad, out of contact with the ground or floor.

Control over the movement of the delivery device 10 may be implemented through the use of a control handle 20. This handle provides various controls in electrical communication or in wireless communication with the electric motors 16 of the driven casters 14. The control handle 20 may include a variable motor speed control, a speed mode control for selecting, for example, a range of slow speeds versus a range of fast speeds, an on/off switch, etc. The control handle may also include an indicator of battery charge state, as well as safety related functions including a horn and an emergency stop control. The latter may be provided as an actuator positioned such that if the delivery device pushes against an operator or obstacle, the actuator is activated and power to the electric motors is interrupted.

The control handle 20 is also mechanically connected to the bed 12. This mechanical connection may include off-vertical axis tilt as well as rotation about a vertical axis through the point of connection with the bed. Thus, while the driven casters 14 selectively provide motive power, an operator may use the control handle 20 to steer the delivery device 10 and, if required, may also provide physical force for moving or braking the delivery device. Spring biasing or other mechanical elements may be provided to bias the control handle into a substantially vertical rest position.

In the delivery device 10 embodiment of Figs. 1A-1C, disposed atop the bed 12 is a cradle 22. As seen in the end views of Figs. 1A and 1C, the cradle has a frusto-cylindrical cross-section with a lower extent in contact with an upper surface of the bed and partial upwardly curving side portions 22A, 22B. The radius of the cradle is selected to accommodate the flooring product or other goods to be borne therein, in one embodiment.

While the side portions of the cradle 22A, 22B may extend to the same or a similar vertical height with respect to the bed 12, in the illustrated embodiment, one side of the cradle 22A is lower than the other, higher side 22B. In this embodiment, an outer portion of the lower side is rotatably attached to the bed via a horizontal pivot 24. Proximate the higher side is an off-loading lever 26 in mechanical communication with the bed via a horizontal pivot 28. When it is desired to off-load the flooring product, an operator may pull the off-loading lever in an arcuate and downward direction, away from the delivery device 10. As the lever rotates about the respective pivot, a lower extent of the lever presses against an outer surface of the cradle higher side 22B. This forces the cradle to rotate about the lower side pivot, thereby enabling the flooring product to roll out of the cradle onto the ground or floor next to the delivery device, or onto some other desired receiving surface. Once the flooring product is so delivered, the lever is returned to a vertical rest position, either under spring bias or as a result of the weight of the cradle pushing the lower extent of the lever back into a rest position.

In other embodiments, the mechanical off-loading lever is replaced with driven means such as an electrically driven, motorized lift.

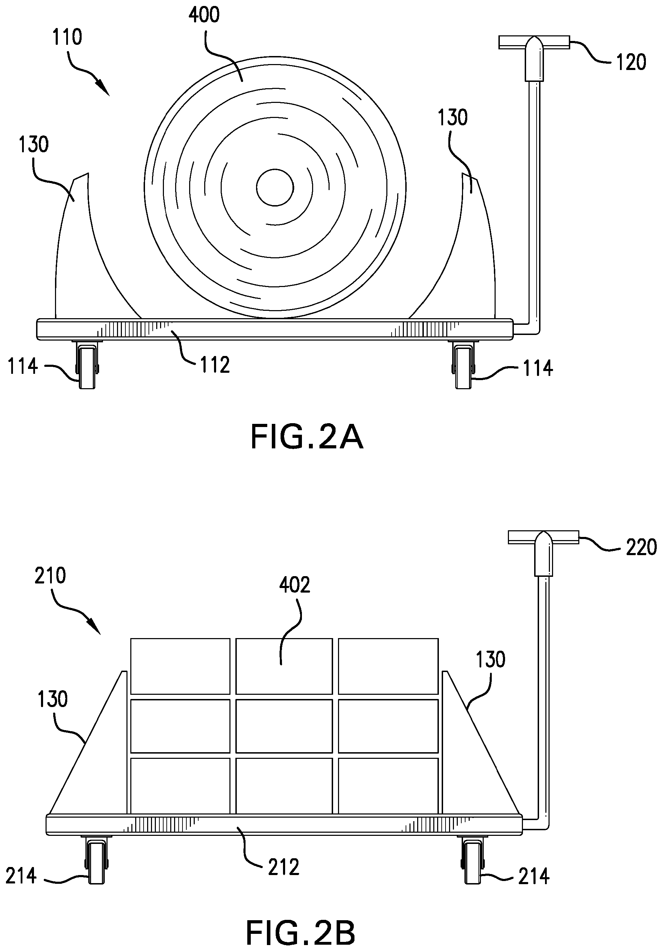

In alternative embodiments, the delivery device bed is provided with mechanical means for engaging a variety of different cargo supports. In Fig. 2A, a delivery device 110 has a bed 112, passive and driven casters 114, and a control handle 120 as described with respect to the delivery device 10 of Figs. 1A-1C. However, in place of the cradle 22 of that embodiment, the delivery device of Fig. 2A is provided with a pair of parallel, curved chocks 130 that are in selective mechanical engagement with the respective bed. Thus, for a flooring product roll of large diameter, the curved chocks may be locked into place on an upper surface of the bed at a first, wider lateral position. For a flooring product roll of small diameter, the curved chocks may be locked into place at a second, smaller lateral position.

With respect to Fig. 2B, a delivery device 210 has a bed 212, passive and driven casters 214, and a control handle 220 as described with respect to the delivery device 10 of Figs. 1A-1C. In this embodiment, the pair of curved chocks 130 of Fig. 2A may be reconfigured to present a flat inward surface. In this configuration, articles 402 such as boxed or packaged goods, planks or tiles may be carried atop the respective bed 212, with the distance between the chocks being adjustable according to the width of the product(s) being carried. Alternatively, in this embodiment, the curved chocks may be replaced with other chocks especially shaped for use with rectangular solid articles.

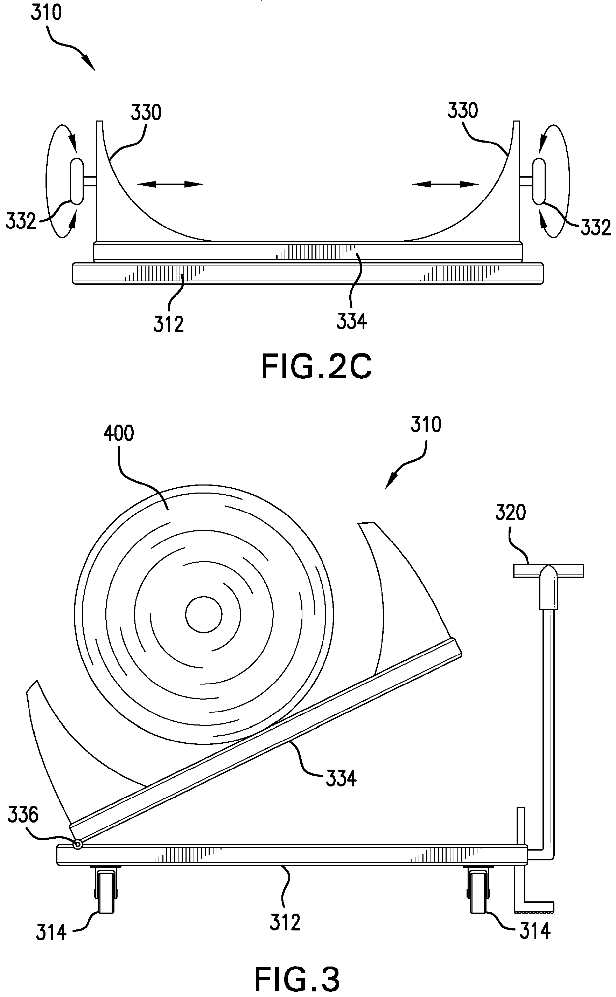

In Fig. 2C, a further embodiment includes a delivery device 310 having a bed 312. This embodiment includes a pair of adjustable chocks 330, each having a respective positioning handle 332. The adjustable chocks are shown in mechanical communication with a plate 334 that is itself in mechanical communication with the bed. The plate and adjustable chocks are provided with mutually cooperating mechanical features that enable the chocks to be laterally repositioned, with respect to the width of the delivery device, as each respective positioning handle is rotated clockwise or counterclockwise. For example, the plate may include a lateral slot having one side lined with inwardly projecting teeth. Each chock may have a gear extending down into the slot. The gear is disposed upon a vertical rod within the chock which is driven by rotational operation of the handle. Thus, rotation of the handle results in the gear rotating and traveling along the rack of teeth within the slot. Various sized rolled flooring products may thus be accommodated.

In further embodiments, the plate 334 of Fig. 2C may be incorporated into the embodiments of Figs. 2A and 2B to facilitate mechanical interaction with the reconfigurable chocks. Incorporation of the plate into the embodiment of Fig. 2C enables the offloading of a rolled flooring product 400 through the use of a lateral pivot 336 disposed intermediate the plate and the bed 312, as shown in Fig. 3. While not shown in this embodiment, an offloading lever with respective pivot may also be incorporated.

In the foregoing embodiments, the delivery device overall dimensions may be approximately four to six feet (1.2 to 1.8 metres) long and approximately three feet (0.9 metres) wide. At least the bed and cradle may be provided of aluminum for weight savings. The weight savings allow the delivery device to be placed in the delivery trucks while still meeting the weight stipulations of the Department of Transportation (DoT). Further, the compact dimensions allow the delivery device to be placed within the delivery truck without taking up a lot of flooring product cargo or holding space.

Alternative embodiments of the subject matter of this application will become apparent to one of ordinary skill in the art to which the present invention pertains, without departing from the scope of the appended claims.

## Claims

1. A decorative article delivery device (10) comprising:
a planar, rectangular bed (12) having first and second ends;
two passive casters (14) mechanically attached to an underside of the bed (12) at the first end thereof, each of the passive casters (14) configured to be freely rotatable about a respective vertical axis;
two driven casters (14) mechanically attached to the underside of the bed at the second end thereof, each of the driven casters (14) configured to not rotate about a respective vertical axis;
two electric motor units (16), each in communication with a respective one of the two driven casters (14), for selectively driving the respective caster (14) in response to a control signal;
a control handle (20) mechanically communicating with the bed (12) and being in electrical communication with the two electric motor units (16) for selectively conveying the control signal thereto; and
(i) a pair of chocks (130) in mechanical communication with the bed (12) for receiving the
product therein, each chock (130) comprising a first arcuate side and a second
vertically planar side, each chock (130) being selectively, mechanically connected
to opposite sides of the bed (12) with the first or second side thereof facing an
other chock (130); or
(ii) a cradle (22A,22B) in mechanical communication with the bed (12) for receiving the
decorative article therein, the cradle (22A,22B) comprising a frusto-cylindrical member
having an arcuate portion disposed proximate the bed (12) and first and second
upwardly curving side portions, the first side portion being pivotally
connected to the bed (12) along a first horizontal pivot (24); and an off-loading lever (26)
mechanically connected to the bed (12) via a second horizontal pivot (28) for
selectively engaging an outer portion of the second side portion to force the
cradle (22A, 22B) to rotate about the first horizontal pivot (24) for enabling an off-loading
of the decorative article.

2. The decorative article delivery device of claim 1, further comprising a mechanical brake (18) mounted with respect to the bed (12).

3. The decorative article delivery device of claim 2, wherein the brake (18) is a truck lock or jack.

4. The decorative article delivery device of claim 1, further comprising at least one battery in communication with the two electric motor units (16).

5. The decorative article delivery device of claim1, further comprising a plate (334) intermediate the chocks (330) and the bed (12), the plate (334) having a plurality of mechanical features for selective engagement with the chocks (334) for enabling a lateral placement of the chocks (334) across the width of the bed (12).

6. The decorative article delivery device of claim 5, further comprising a lateral pivot (336) intermediate the plate (334) and the bed (12) for enabling the plate (334) to be rotated with respect to the bed (12) for facilitating an off-loading of product from the plate (334).

7. The decorative article delivery device of claim 8, further comprising an off-loading lever (26) mechanically connected to the bed (12) via a lateral pivot (336) for selectively rotating the plate (334) with respect to the bed (12).

## Patentansprüche

1. Dekorationsgegenstandliefervorrichtung (10), umfassend:
ein ebenes, rechteckiges Bett (12), aufweisend ein erstes und ein zweites Ende;
zwei passive Lenkrollen (14), die mechanisch an einer Unterseite des Betts (12) an dem ersten Ende davon befestigt sind, wobei jede der passiven Lenkrollen (14) dazu ausgelegt ist, um eine jeweilige vertikale Achse frei drehbar zu sein;
zwei angetriebene Lenkrollen (14), die mechanisch an der Unterseite des Betts an dem zweiten Ende davon befestigt sind, wobei jede der angetriebenen Lenkrollen (14) dazu ausgelegt ist, sich nicht um eine jeweilige vertikale Achse zu drehen;
zwei Elektromotoreinheiten (16), jeweils in Verbindung mit einer jeweiligen der zwei angetriebenen Lenkrollen (14), zum selektiven Antreiben der jeweiligen Lenkrolle (14) als Reaktion auf ein Steuersignal;
einen Steuergriff (20), der mit dem Bett (12) in mechanischer Verbindung steht und in elektrischer Verbindung mit den zwei Elektromotoreinheiten (16) zum selektiven Übermitteln des Steuersignals dorthin steht; und
(i) ein Paar Keile (130) in mechanischer Verbindung mit dem Bett (12) zum Aufnehmen des Produkts darin, wobei jeder Keil (130) eine erste bogenförmige Seite und eine zweite vertikal ebene Seite umfasst, wobei jeder Keil (130) selektiv, mechanisch mit gegenüberliegenden Seiten des Betts (12) verbunden ist, wobei die erste oder zweite Seite davon einem anderen Keil (130) zugewandt ist; oder
(ii) eine Wiege (22A, 22B) in mechanischer Verbindung mit dem Bett (12) zum Aufnehmen des Dekorationsgegenstands darin, wobei die Wiege (22A, 22B) ein frustozylindrisches Element umfasst, aufweisend einen bogenförmigen Abschnitt, der nahe dem Bett (12) angeordnet ist, und einen ersten und einen zweiten nach oben gebogenen Seitenabschnitt, wobei der erste Seitenabschnitt mit dem Bett (12) entlang eines ersten horizontalen Schwenklagers (24) schwenkbar verbunden ist; und einen Entladehebel (26), der mit dem Bett (12) über ein zweites horizontales Schwenklager (28) mechanisch verbunden ist, zum selektiven Eingreifen in einen äußeren Abschnitt des zweiten Seitenabschnitts, um die Wiege (22A, 22B) zu zwingen, sich um das erste horizontale Schwenklager (24) zu drehen, zum Ermöglichen eines Entladens des Dekorationsgegenstands.

2. Dekorationsgegenstandliefervorrichtung nach Anspruch 1, ferner umfassend eine mechanische Bremse (18), angebracht in Bezug auf das Bett (12).

3. Dekorationsgegenstandliefervorrichtung nach Anspruch 2, wobei die Bremse (18) eine Lkw-Sperre oder ein Wagenheber ist.

4. Dekorationsgegenstandliefervorrichtung nach Anspruch 1, ferner umfassend mindestens eine Batterie in Verbindung mit den zwei Elektromotoreinheiten (16).

5. Dekorationsgegenstandliefervorrichtung nach Anspruch 1, ferner umfassend eine Platte (334) zwischen den Keilen (330) und dem Bett (12), wobei die Platte (334) eine Vielzahl von mechanischen Merkmalen zum selektiven Eingreifen mit den Keilen (334) zum Ermöglichen einer seitlichen Positionierung der Keile (334) über die Breite des Betts (12) aufweist.

6. Dekorationsgegenstandliefervorrichtung nach Anspruch 5, ferner umfassend ein seitliches Schwenklager (336) zwischen der Platte (334) und dem Bett (12) zum Ermöglichen, dass die Platte (334) in Bezug auf das Bett (12) gedreht wird, zum Erleichtern eines Entladens von Produkt von der Platte (334).

7. Dekorationsgegenstandliefervorrichtung nach Anspruch 8, ferner umfassend einen Entladehebel (26), der mit dem Bett (12) über ein seitliches Schwenklager (336) mechanisch verbunden ist, zum selektiven Drehen der Platte (334) in Bezug auf das Bett (12).

## Revendications

1. Dispositif de distribution d'article décoratif (10) comprenant :
un lit (12) plan rectangulaire ayant des première et seconde extrémités ;
deux roulettes passives (14) fixées mécaniquement à un côté inférieur du lit (12) au niveau de sa première extrémité, chacune des roulettes passives (14) étant configurée pour être librement rotative autour d'un axe vertical respectif ;
deux roulettes motrices (14) fixées mécaniquement au côté inférieur du lit au niveau de sa seconde extrémité, chacune des roulettes motrices (14) étant configurée pour ne pas tourner autour d'un axe vertical respectif ;
deux unités de moteur électrique (16), chacune en communication avec une roulette respective des deux roulettes motrices (14), pour entraîner sélectivement la roulette (14) respective en réponse à un signal de commande ;
une poignée de commande (20) communiquant mécaniquement avec le lit (12) et étant en communication électrique avec les deux unités de moteur électrique (16) pour leur transmettre sélectivement le signal de commande ; et
(i) une paire de cales (130) en communication mécanique avec le lit (12) pour recevoir le produit à l'intérieur, chaque cale (130) comprenant un premier côté arqué et un second côté plan vertical, chaque cale (130) étant reliée mécaniquement et sélectivement à des côtés opposés du lit (12), son premier ou son second côté faisant face à une autre cale (130) ; ou
(ii) un berceau (22A, 22B) en communication mécanique avec le lit (12) pour recevoir l'article décoratif à l'intérieur, le berceau (22A, 22B) comprenant un élément tronconique cylindrique ayant une partie arquée disposée près du lit (12) et des première et seconde parties latérales incurvées vers le haut, la première partie latérale étant reliée de manière pivotante au lit (12) le long d'un premier pivot horizontal (24) ; et un levier de déchargement (26) relié mécaniquement au lit (12) par l'intermédiaire d'un second pivot horizontal (28) pour entrer en prise sélectivement avec une partie externe de la seconde partie latérale afin de forcer le berceau (22A, 22B) à tourner autour du premier pivot horizontal (24) pour permettre le déchargement de l'article décoratif.

2. Dispositif de distribution d'article décoratif selon la revendication 1, comprenant en outre un frein mécanique (18) monté par rapport au lit (12).

3. Dispositif de distribution d'article décoratif selon la revendication 2, dans lequel le frein (18) est un bloqueur de chariot ou un vérin.

4. Dispositif de distribution d'article décoratif selon la revendication 1, comprenant en outre au moins une batterie en communication avec les deux unités de moteur électrique (16).

5. Dispositif de distribution d'article décoratif selon la revendication 1, comprenant en outre une plaque (334) intermédiaire entre les cales (330) et le lit (12), la plaque (334) ayant une pluralité de caractéristiques mécaniques pour une mise en prise sélective avec les cales (334) afin de permettre un placement latéral des cales (334) sur toute la largeur du lit (12).

6. Dispositif de distribution d'article décoratif selon la revendication 5, comprenant en outre un pivot latéral (336) intermédiaire entre la plaque (334) et le lit (12) pour permettre à la plaque (334) d'être tournée par rapport au lit (12) afin de faciliter un déchargement du produit de la plaque (334).

7. Dispositif de distribution d'article décoratif selon la revendication 8, comprenant en outre un levier de déchargement (26) relié mécaniquement au lit (12) par l'intermédiaire d'un pivot latéral (336) pour faire tourner sélectivement la plaque (334) par rapport au lit (12).
